# EUROPÄISCHE PATENTSCHRIFT

(11) **EP 2 935 983 B1**
(45) Veröffentlichungstag und Bekanntmachung des Hinweises auf die Patenterteilung: **04.09.2019**
(21) Anmeldenummer: 13817640.9
(22) Anmeldetag: 05.12.2013
(51) Int. Cl.: F21S 41/29, F21S 41/24, F21S 41/39, F21S 41/32, F21S 41/663, F21S 41/143

(54) **LEUCHTEINHEIT MIT EINER LICHTFÜHRUNGSEINHEIT FÜR EINEN SCHEINWERFER**
LIGHT EMITTING UNIT COMPRISING A LIGHT GUIDE UNIT FOR A PROJECTOR LAMP
UNITÉ D'ÉCLAIRAGE COMPRENANT UNE UNITÉ DE GUIDAGE DE LUMIÈRE POUR UN PROJECTEUR

(30) Priorität: 20.12.2012 AT 506092012
(43) Veröffentlichungstag der Anmeldung: 28.10.2015
(73) Patentinhaber: ZKW Group GmbH, 3250 Wieselburg (AT)
(72) Erfinder: KRENN, Irmgard, A-3251 Purgstall/Erlauf (AT)
(74) Vertreter: Patentanwaltskanzlei Matschnig & Forsthuber OG
(86) Internationale Anmeldenummer: PCT/AT2013/050236
(87) Internationale Veröffentlichungsnummer: WO 2014/094018

(56) Entgegenhaltungen:
- EP-A2- 2 037 167
- EP-A2- 2 280 215
- WO-A1-2014/012128
- DE-A1-102011 054 230
- FR-A5- 2 048 179
- US-A1- 2005 140 270
- US-A1- 2006 067 077
- US-A1- 2008 253 144
- US-B1- 7 914 162

## Beschreibung

Die Erfindung betrifft eine Leuchteinheit für einen Scheinwerfer, insbesondere einen Kraftfahrzeugscheinwerfer, gemäß dem Oberbegriff des Anspruchs 1.

Weiters betrifft die Erfindung einen Fahrzeugscheinwerfer für ein Kraftfahrzeug mit zumindest einer solchen Leuchteinheit.

Mit einer oben erwähnten Leuchteinheit ist es möglich, eine Lichtfunktion wie z.B. eine Abblendlichtverteilung oder eine Fernlichtverteilung aus einer Vielzahl von Teillichtverteilungen aufzubauen. Diese Teillichtverteilungen können durch individuelle Ansteuerung der Lichtquellen individuell angesteuert werden, sodass beispielsweise Teile der Lichtverteilung gezielt ausgeblendet oder gedimmt oder nur bestimmte Teile der Lichtverteilung eingeschaltet oder gedimmt betrieben werden können. Damit wird es somit möglich, die Lichtverteilung in Abhängigkeit der Fahrsituation nahezu beliebig zu steuern.

Funktionen, die mit dieser Technik realisiert werden können sind z.B. Teilfernlicht, bei welchem zur Entblendung des Gegenverkehrs Segmente im Lichtbild der Fernlichtverteilung abgeschaltet werden, Verlagerung des Lichtschwerpunktes im Abblendlicht (vergleiche Kurvenlicht), Reduktion der Vorfeldlichtverteilung zum Zwecke der Entblendung des Gegenverkehrs bei nasser Straße (Schlechtwetterlicht), usw.

Die einzelnen Lichtsegmente in der Lichtverteilung werden mittels Lichtführungen erzeugt, welche zu einer Lichtführungseinheit zusammengefügt sind, und durch welche Lichtführungen das von den künstlichen Lichtquellen ausgestrahlt in Abstrahlrichtung gebündelt wird. Die Lichtführungen weisen einen relativ geringen Querschnitt auf und senden das Licht der ihnen je zugeordneten einzelnen Lichtquellen daher sehr konzentriert in die Abstrahlrichtung aus. In der AT 510 437 A4 ist in diesem Zusammenhang ein Lichtmodul offenbart, welches eine Lichtführung in Form eines Lichtleiters, dort als Lichttunnel bezeichnet, sowie eine Mehrzahl von Lichtquellen aufweist.

Die konzentrierte Abstrahlung der Lichtführungen ist erwünscht, um beispielsweise gesetzliche Vorgaben bezüglich der Hell-Dunkel-Linie des Abblendlichtes eines Kraftfahrzeugscheinwerfers zu erfüllen. Außerdem haben scharf abgegrenzte, mittels der Lichtführungen erzeugte Lichtsegmente den Vorteil, dass exakt begrenzte Bereiche in einem Lichtbild ausgeblendet werden können.

Zwangsläufig, um von einander getrennte Lichtsegmente erzeugen zu können, sind die Lichtführungen voneinander getrennt. Üblicherweise wird dabei eine Lichtführungseinheit, welche eine Anzahl an Lichtführungen aufweist, in einem Stück (oder in teilweise in zwei Stücken, einem in Lichtaustrittsrichtung vorderen und einem hinteren Teil - dies ist für die vorliegende Erfindung allerdings nebensächlich) gefertigt, und die einzelnen Lichtführungen sind voneinander getrennt, konkret durch Wände bzw. Trennstege, welche sich in Lichtaustrittsrichtung bis in den Bereich der Lichtauskoppelflächen der einzelnen Lichtführungen erstrecken. Typischerweise sind die Lichtführungseinheiten aus Metall oder Kunststoff gebildet, bei einem zweiteiligen Aufbau wie oben kurz erwähnt können die beiden Teile auch aus unterschiedlichen Materialien gefertigt sein.

Bei der "einstückigen" Fertigung der Lichtführungseinheit mit den in ihr ausgebildeten Lichtführungen ergibt sich allerdings der Nachteil, dass die Wandstärke der (Trenn-)Wände bzw. (Trenn-)Stege zwischen benachbarten Lichtführungen im Bereich der Lichtauskoppelflächen der Lichtführungen einen gewissen Wert aufweist, der fertigungstechnisch nicht oder nur mit großem Aufwand unterschritten werden kann. Eine zu große Wandstärke der Trennwände zwischen den Lichtführungen führt allerdings dazu, dass sich im Lichtbild Streifen, insbesondere vertikale und/oder horizontale Streifen bilden.

Eine eingangs erwähnte Lichtführungseinheit für eine Leuchteinheit, welche ein Aufnahmeelement umfasst, welches Aufnahmeelement eine in Lichtaustrittsrichtung das Aufnahmeelement vollständig durchsetzende Aufnahmeöffnung aufweist, sowie weiters zumindest einen Lichtführungskörper umfasst, welcher zumindest eine Lichtführungskörper als von dem Aufnahmeelement getrennt ausgebildetes Bauelement ausgebildet ist, in welchem zumindest einen Lichtführungskörper zumindest ein Teil der Lichtführungen der Lichtführungseinheit ausgebildet ist, und wobei der zumindest eine Lichtführungskörper in die Aufnahmeöffnung des Aufnahmeelementes eingesetzt ist, ist aus der US 2005/0140270 und der US 7914162 bekannt.

Es ist eine Aufgabe der Erfindung, eine weiter verbesserte Ausführungsform einer solchen Leuchteinheit anzugeben.

Diese Aufgabe wird mit einer eingangs genannten Leuchteinheit dadurch gelöst, dass erfindungsgemäß in dem zumindest einen Lichtführungskörper Halteöffnungen, z.B. Halteschlitze zur Aufnahme von zumindest einem in Einbaulage im Wesentlichen horizontal liegenden Trennsteg vorgesehen sind.

Durch die separate Ausgestaltung der Lichtführungen in Form zumindest eines separaten Lichtführungskörpers kann dieser zumindest eine Lichtführungskörper in optimaler Weise fertigungstechnisch bearbeitet werden und das geeignete Material verwendet werden, um möglichst geringe Wandstärken der Trennwände, welche benachbarte Lichtführungen voneinander trennen, insbesondere im Bereich der Lichtauskoppelflächen der Lichtführungen realisieren zu können.

Vorzugsweise ist vorgesehen, dass der zumindest eine Lichtführungskörper in der Aufnahmeöffnung des Aufnahmeelementes fix befestigt ist.

Nach dem Einsetzen und Positionieren wird der zumindest eine Lichtführungskörper in der lichttechnisch korrekten Position in der Aufnahmeöffnung fix, in der Regel unlösbar befestigt, damit dieser auch im Fahrbetrieb eines Kraftfahrzeuges seine Position nicht mehr ändern kann

Beispielsweise wird der Lichtführungskörper mit dem Aufnahmeelement heißverstemmt, oder die beiden Teile werden miteinander verrastet.

Mit besonderem Vorteil ist vorgesehen, dass genau ein Lichtführungskörper vorgesehen ist, welcher alle Lichtführungen der Lichtführungseinheit aufweist.

Falls es aus konstruktiven Gründen etc. günstig ist, kann auch vorgesehen sein, dass zwei oder mehrere Lichtführungskörper vorgesehen sind, die beispielsweise in Einbaulage seitlich nebeneinander liegen. In der Regel ist es aber ausreichend, wenn lediglich ein Lichtführungskörper verwendet wird, der praktisch die gesamte Aufnahmeöffnung des Aufnahmeelementes ausfüllt. Die Verwendung eines einzigen Lichtführungskörpers hat in der Regel fertigungstechnische und lagertechnische Vorteile, auch der Zusammenbau der Lichtführungseinheit ist mit nur einem Lichtführungskörper deutlich einfacher und rascher möglich.

Bei einer konkreten Ausführungsform ist vorgesehen, dass der zumindest eine Lichtführungskörper in Einbaulage seitlich nebeneinander liegende, sich im Wesentlichen über die gesamte Höhe des Lichtführungskörpers erstreckende Lichtführungen aufweist.

Auf diese Weise wird eine Reihe nebeneinander liegender Lichtführungen realisiert.

Bei einer konkreten Ausführungsform ist vorgesehen, dass Halteöffnungen, z.B. Halteschlitze für genau zwei Trennstege vorgesehen sind, wobei die Halteöffnungen derart angeordnet sind, dass in Einbaulage ein Trennsteg oberhalb des zweiten Trennsteges liegt, und wobei die eingesetzten Trennstege die sich über die gesamte Höhe des Lichtführungskörpers erstreckenden Lichtführungen in drei Reihen von Lichtführungen unterteilt.

Mit drei Reihen von Lichtführungen können im Lichtbild beispielsweise ein Fernbereich, ein Vorfeldbereich im Bereich einer Hell-Dunkelgrenze (etwa für ein Abblendlicht) und ein Vorfeld-Nahbereich zur Ausleuchtung des Bereiches nahe vor dem Fahrzeug realisiert werden.

Weiters ist vorgesehen, dass sich der zumindest eine Trennsteg über im Wesentlichen die gesamte Breite des zumindest einen Lichtführungskörpers erstreckt. Dies hat einerseits fertigungstechnische Vorteile und erlaubt andererseits eine einfache, genaue Positionierung bzw. Halterung des Lichtführungskörpers an dem Aufnahmeelement, wie dies in der weiteren Beschreibung noch erörtert wird.

Von besonderem Vorteil ist es, wenn der zumindest eine Lichtführungskörper aus einem länglichen und flächigen, vorzugsweise ebenen Element gebildet ist, an welchem Element eine Anzahl von Biegelinien vorgesehen sind, welche Biegelinien sich normal zu den Längsseiten des Elementes erstrecken, und wobei das Element an den Biegelinien derart umgebogen ist, dass durchgehende, sich über die gesamte Höhe des Lichtführungskörpers ersteckende und unmittelbar nebeneinander liegende Lichtführungen gebildet sind.

Ein solches Element lässt sich besonders einfach zumindest im Bereich der die Trennwände zwischen den Lichtführungen im Bereich der Lichtauskoppelflächen bildenden Abschnitte mit geringer Stärke ausgestalten, sodass auch die Trennwände zwischen den Lichtführungen im Bereich der Lichtauskoppelflächen dann mit geringer Wandstärke ausgeführt werden können.

Konkret ist dabei vorgesehen, dass jeweils paarweise zwei Biegelinien in einem ersten Abstand zueinander verlaufen, und wobei benachbarte Paare von Biegelinien in einem zweiten Abstand, der größer ist als der erste Abstand, zueinander angeordnet sind, wobei der zweite Abstand zwischen zwei benachbarten Biegelinien benachbarter Paare von Biegelinien gemessen ist, und wobei das Element um die beiden Biegelinien eines Biegelinie-Paares jeweils in gleicher Richtung um 90° gebogen ist, und wobei die Biegelinien benachbarter Biegelinien-Paare in entgegen gesetzter Richtung gebogen sind.

Auf diese Weise werden nebeneinander liegende, vertikale Lichtführungen ausgebildet.

Um gleich breite Lichtführungen zu erhalten, ist vorgesehen, dass der Abstand zwischen zwei Biegelinien eines Biegelinien-Paares für alle Biegelinien-Paare des Elementes identisch ist.

Um gleich hohe, über die gesamte Höhe durchgehende Lichtführungen zu erhalten, ist vorgesehen, dass der Abstand zwischen zwei benachbarten Biegelinien-Paaren zwischen allen Biegelinien-Paaren des Elementes identisch ist.

Weiters ist bei einer konkreten Ausführungsform vorgesehen, dass das Element an einer Längsseite jeweils zwischen zwei Biegelinien-Paaren vorstehende Abschnitte aufweist, welche im endgefertigten Zustand die vertikalen Trennwände zwischen vertikalen Lichtführungen im Bereich der Lichtauskoppelflächen der Lichtführungen bilden.

Diese Abschnitte bieten eine Möglichkeit zur vertikalen Zentrierung des Lichtführungskörpers in der Aufnahmeöffnung. Außerdem sind vorzugsweise diese Abschnitte mit möglichst geringer (Wand-)Stärke ausgeführt, da diese die vertikalen Trennwände zwischen den Lichtführungen im Bereich der Lichtauskoppelflächen bilden. Mit den in umgebogenem Zustand nach oben und unten über diese Abschnitte überstehenden Bereichen wird der Lichtführungskörper in die Aufnahmeöffnung eingesetzt und dort befestigt.

Bei einer einfachen Ausführungsform der Erfindung ist vorgesehen, dass die vorspringenden Abschnitte geradlinig verlaufend, d.h. parallel zur der gegenüberliegenden Längsseite ausgebildet sind.

Vorzugsweise liegen die Lichtauskoppelflächen der Lichtführungen in einer Brennebene der Projektionslinse. Entsprechend sind die Lichtauskoppelflächen gekrümmt ausgebildet. Um dies realisieren zu können, ist daher vorzugsweise vorgesehen, dass die vorspringenden Abschnitte gekrümmt, und zwar zu der gegenüberliegenden Längsseite hin gekrümmt sind.

Auf diese Weise lässt sich eine Krümmung der Lichtauskoppelflächen in vertikaler Richtung realisieren.

Typischerweise ist dabei vorgesehen, dass die gekrümmten Abschnitte in etwa in ihrer Mitte einen Minimalanstand zu der gegenüberliegenden Längsseite aufweisen.

Um weiters eine Krümmung der Lichtauskoppelflächen in horizontaler Richtung realisieren zu können, ist vorgesehen, dass in den beiden seitlich äußeren Bereichen des Elementes die vorspringenden Abschnitte den größten Abstand zu der gegenüberliegenden Längsseite aufweisen, und dass von beiden Seiten bei einem Fortschreiten entlang der Längsseite in Richtung der Mitte des Elementes die Abstände der vorspringenden Abschnitte zu der gegenüberliegenden Längsseite abnehmen.

Zur Realisierung von zwei oder mehreren horizontalen Reihen von Lichtführungen ist vorgesehen, dass die zumindest eine Halteöffnung, z.B. Halteschlitz bzw. vorzugsweise die beiden Halteöffnungen bzw. Halteschlitze für den zumindest einen Trennsteg, vorzugsweise für zwei Trennstege im Bereich der vorstehenden Abschnitte angeordnet sind, vorzugsweise als schlitzförmige, sich ausgehend von den vorstehenden Abschnitten normal zu den Längsseiten in das Element hinein erstreckende Vertiefungen ausgebildet sind.

Die vorstehenden Abschnitte, welche durchgehende vertikale Lichtführungen bilden, werden auf diese Weise in vertikaler Richtung unterteilt.

Weiters ist vorgesehen, dass die den vorspringenden Abschnitten gegenüberliegende Längsseite durchgehend geradlinig ausgebildet ist.

Auf der Materialseite hat es sich als günstig erwiesen, wenn das Element ein Blechelement ist. Ein solches Blechelement lässt sich gut bearbeiten, ist kostengünstig und stabil.

Um eine möglichst geringe Stärke im Bereich der vorstehenden Abschnitte, also eine geringe Stärke der vertikalen Trennwände zwischen den Lichtführungen insbesondere im Bereich der Lichtauskoppelflächen realisieren zu können, kann vorgesehen sein, dass das Element eine durchgehende Stärke, vorzugsweise von ca. 0,1 mm aufweist.

Allerdings kann dann der Fall auftreten, dass das Element den mechanischen Belastungen insbesondere beim Einbau nicht standhält und sich leicht verformt, etwa verbiegt.

Deshalb ist bei einer anderen, vorteilhaften Realisierung vorgesehen, dass das Element zumindest, vorzugsweise lediglich im Bereich der Trennwände zwischen den vertikalen Lichtführungen, vorzugsweise im Bereich der Lichtauskoppelflächen, auf eine definierte Stärke, vorzugsweise eine Stärke von ca. 0,1 mm gefertigt, vorzugsweise geprägt ist.

Das Element kann somit ausreichend stark dimensioniert werden, um den mechanischen Belastungen standzuhalten und wird nur in den optisch relevanten Bereichen, d.h. in jenen Bereichen, welche die vertikalen Trennwände im Bereich der Lichtauskoppelflächen darstellen, mit geringer(er) Stärke gefertigt.

Bei einer konkreten Realisierung der Erfindung ist vorgesehen, dass das Element in seine Vor-Biegeform gestanzt ist.

Weiters ist mit Vorteil vorgesehen, dass der Lichtführungskörper bzw. das Element, vorzugsweise das Blechelement Licht reflektierend, vorzugsweise hochglänzend ausgebildet ist. Vorzugsweise werden dazu Spiegelbleche, welche einen Reflexionsgrad > 95% aufweisen, verwendet.

Insbesondere ist vorgesehen, dass das Element, vorzugsweise das Blechelement beidseitig Licht reflektierend, insbesondere hochglänzend ausgebildet ist.

Weiters ist mit Vorteil vorgesehen, dass der zumindest eine Trennsteg, licht-reflektierend, vorzugsweise hochglänzend ausgebildet ist, vorzugsweise beidseitig Licht reflektierend, insbesondere hochglänzend ausgebildet ist.

Vorzugsweise ist die Aufnahme aus einem Kunststoff gebildet. Dieser lässt sich besonders einfach formen.

Weiters ist auch noch mit Vorteil vorgesehen, dass die Aufnahme in ihrer Aufnahmeöffnung zumindest im oberen und/oder unteren Bereich Licht reflektierend, insbesondere hochglänzende ausgebildet, vorzugsweise mit einer Licht reflektierend, insbesondere hochglänzenden Schicht beschichtet, etwa bedampft ist.

Die Lichtführungen der oberen bzw. unteren Reihe werden nach oben bzw. nach unten hin von der oberen bzw. unteren Innenseite des Aufnahmeelementes begrenzt, sodass es von Vorteil ist, wenn auch diese Bereiche Licht reflektierend ausgebildet sind.

Weiters ist beispielsweise vorgesehen, dass der zumindest eine Lichtführungskörper Licht reflektierend, insbesondere hochglänzend lackiert ist.

Im Folgenden ist die Erfindung an Hand der Zeichnung an einer beispielhaften Ausführungsform der Erfindung näher erörtert. In dieser zeigt
Fig. 1 eine perspektivische Explosionsdarstellung einer Leuchteinheit mit einer erfindungsgemäßen Lichtführungseinheit,
Fig. 2 eine perspektivische Explosionsdarstellung einer erfindungsgemäßen Lichtführungseinheit,
Fig. 3 ein Blechelement zur Formung des Lichtführungskörpers vor dem Umbiegeprozess,
Fig. 4 einen Lichtführungskörper geformt aus einem Blechelement aus Figur 3 in einer perspektivischen Ansicht,
Fig. 5 einen Schnitt entlang der Ebene A-A durch eine Lichtführungseinheit aus Figur 1,
Fig. 5a ein Detail aus Figur 5 im Bereich der Schlitze in der Aufnahmeöffnung, und
Fig. 6 einen Schnitt entlang der Ebene C-C durch eine Lichtführungseinheit aus Figur 1.

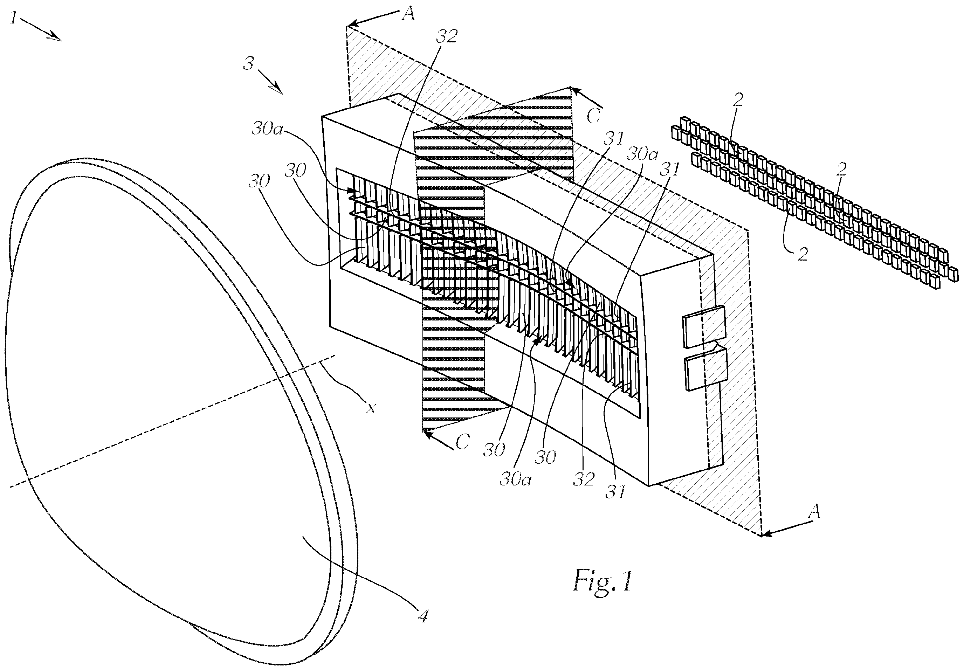

Figur 1 zeigt eine erfindungsgemäße Leuchteinheit 1 für einen Kraftfahrzeugscheinwerfer, bestehend aus einer Mehrzahl von Lichtquellen 2, einer Lichtführungseinheit 3 mit einer Mehrzahl von Lichtführungen 30 und einer nachgeschalteten Projektionslinse 4. Jede Lichtführung 30 weist eine Lichtauskoppelfläche 30a auf, und über eine - in den Figuren nicht erkennbare Lichteinkoppelfläche - koppelt jede Lichtquelle 2 Licht genau in die ihr zugeordnete Lichtführung 30 ein.

Bei den Lichtquellen 2 handelt es sich um LED-Lichtquellen, wobei jede LED-Lichtquelle 2 zumindest eine oder genau eine Leuchtdiode umfasst. Vorzugsweise ist dabei jede LED-Lichtquelle 2 getrennt ansteuerbar und ein- bzw. ausschaltbar und/oder dimmbar ist, wobei vorzugsweise bei zwei oder mehreren Leuchtdioden pro LED-Lichtquelle jede Leuchtdiode einer LED-Lichtquelle getrennt ansteuerbar und ein- bzw. ausschaltbar und/oder dimmbar ist.

Die Lichtführungen 30 sind in der Lichtführungseinheit 3 nebeneinander und in dem gezeigten Beispiel in drei übereinander liegenden Reihen angeordnet. Die Lichtführungen 30 sind dabei im Wesentlichen in Richtung einer der Projektionslinse 4 zugehörigen optischen Achse x ausgerichtet.

Bei der gezeigten Ausführungsform sind die Lichtführungen 30 als Reflektoren ausgeführt, bilden also quasi ein hohles Rohr, und weisen Lichtauskoppelflächen 30a auf, die dazu eingerichtet sind, das Licht in Richtung der nachgeschalteten Projektionslinse 4 abzustrahlen. Die Lichtauskoppelflächen 30a ebenso wie die nicht erkennbaren Lichteinkoppelflächen sind somit begrenzte Öffnungen in der Lichtführungseinheit 3.

Die Lichtführungen 30 werden jeweils von zwei im Wesentlichen vertikalen (Trenn-)Wänden 31 und zwei im Wesentlichen horizontalen (Trenn-)Wänden 32 begrenzt. Die Lichtführungen 30 der oberen und unteren Reihe sind in dem gezeigten Beispiel rechteckförmig ausgebildet, während die Lichtführungen der mittleren Reihe quadratisch ausgebildet sind. Die vertikalen Wände 31 begrenzen jeweils seitlich nebeneinander angeordnete Lichtführungen 30 und trennen diese voneinander, zusätzlich sind die Lichtführungen 30 der mittleren Reihe von den oberen bzw. unteren durch die horizontalen Trennwände 32 voneinander getrennt.

Tatsächlich bezeichnen die Bezugszeichen 31 und 32 die jeweiligen Wände im Bereich der Lichtauskoppelflächen 30a der Lichtaustrittsflächen 30. Da aber für den Fachmann klar ersichtlich ist, was gemeint ist, werden die Bezugszeichen 31, 32 sowohl für die Trennwände als auch deren Kanten im Bereich der Lichtauskoppelflächen 30a verwendet. Soweit es einen Unterschied macht, ob es sich um die Kante oder die gesamte Trennwand handelt, wird dies im Text explizit erwähnt.

Diese Trennwände 31, 32 weisen nun fertigungstechnisch bedingt eine bestimmte Wandstärke im Bereich der Lichtauskoppelflächen 30a auf; ist diese Wandstärke zu groß, so bilden sich im Lichtbild zwischen den aktivierten Lichtsegmenten vertikale und horizontale Streifen.

Normalerweise wird eine Lichtführungseinheit in einem Stück gefertigt. Dabei ergibt sich allerdings der Nachteil, dass die Wandstärke der (Trenn-)Wände bzw. (Trenn-)Stege zwischen benachbarten Lichtführungen im Bereich der Lichtauskoppelflächen der Lichtführungen einen gewissen Wert aufweist, der fertigungstechnisch nicht oder nur mit großem Aufwand unterschritten werden kann. Eine zu große Wandstärke der Trennwände zwischen den Lichtführungen führt allerdings dazu, dass sich im Lichtbild Streifen, insbesondere vertikale und/oder horizontale Streifen bilden.

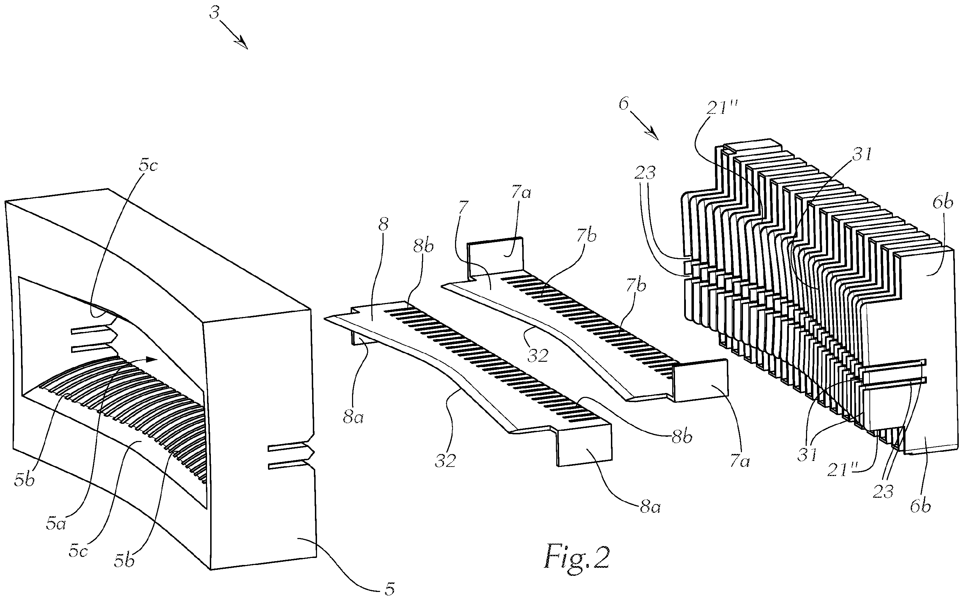

Um nun auf einfache Weise geringere Wandstärken insbesondere im Bereich der Lichtauskoppelflächen 30a der Lichtführungen 30 realisieren zu können, ist vorgesehen, dass wie in Figur 2 gut zu entnehmen die Lichtführungseinheit 3 ein Aufnahmeelement 5 umfasst, welches Aufnahmeelement 5 eine in Lichtaustrittsrichtung das Aufnahmeelement 5 vollständig durchsetzende Aufnahmeöffnung 5a aufweist. Weiters umfasst sie einen Lichtführungskörper 6, welcher als von dem Aufnahmeelement 5 getrennt ausgebildetes Bauelement ausgebildet ist. In dem Lichtführungskörper 6 sind die Lichtführungen 30 der Lichtführungseinheit 3 ausgebildet. Der Lichtführungskörper 6 wird in die Aufnahmeöffnung 5a des Aufnahmeelementes 5 eingesetzt, sodass sich die in Figur 1 gezeigte Lichtführungseinheit 3 ergibt.

Durch die separate Ausgestaltung der Lichtführungen 30 in Form eines separaten Lichtführungskörpers 6 kann dieser Lichtführungskörper 6 in optimaler Weise fertigungstechnisch bearbeitet werden und das geeignete Material verwendet werden, um möglichst geringe Wandstärken der Trennwände 31, welche benachbarte Lichtführungen 30 voneinander trennen, insbesondere im Bereich der Lichtauskoppelflächen 30a der Lichtführungen 30 realisieren zu können.

Der Lichtführungskörper 6 wird dabei in der Aufnahmeöffnung 5a des Aufnahmeelementes 5 fix, in der Regel unlösbar befestigt, damit dieser auch im Fahrbetrieb eines Kraftfahrzeuges seine Position nicht mehr ändern kann

Beispielsweise wird der Lichtführungskörper 6 mit dem Aufnahmeelement 5 heiß verstemmt, oder die beiden Teile 5, 6 werden miteinander verrastet.

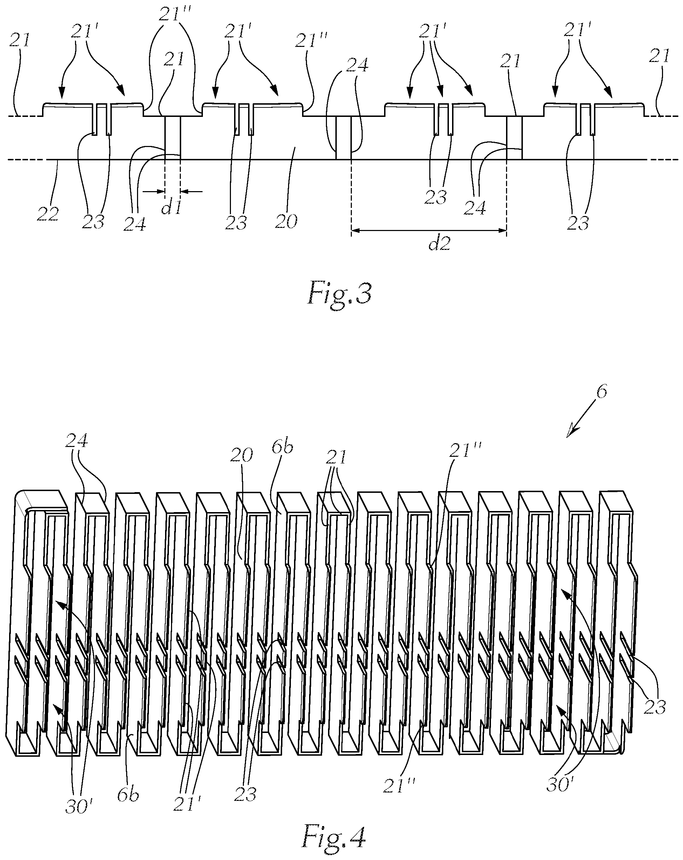

Der Lichtführungskörper 6 weist in Einbaulage, wie dies in Figur 2 und Figur 4 besonders gut zu erkennen ist, seitlich nebeneinander liegende, sich im Wesentlichen über die gesamte Höhe des Lichtführungskörpers 6 erstreckende Lichtführungen 30' auf, sodass mit dem Lichtführungskörper 6 eine Reihe nebeneinander liegender Lichtführungen 30' realisiert wird.

Weiters ist vorgesehen, dass in dem Lichtführungskörper 6 Halteöffnungen, z.B. Halteschlitze 23 zur Aufnahme von zwei in Einbaulage im Wesentlichen horizontal liegenden Trennstegen 7, 8 vorgesehen sind. Trennsteg 7 liegt dabei oberhalb von Trennsteg 8, sodass die eingesetzten Trennstege 7, 8 die sich über die gesamte Höhe des Lichtführungskörpers 6 erstreckenden Lichtführungen 30' in drei Reihen von Lichtführungen 30 unterteilen.

Mit drei Reihen von Lichtführungen können im Lichtbild beispielsweise ein Fernbereich, ein Vorfeldbereich im Bereich einer Hell-Dunkelgrenze (etwa für ein Abblendlicht) und ein Vorfeld-Nahbereich zur Ausleuchtung des Bereiches nahe vor dem Fahrzeug realisiert werden.

Im vorderen Bereich laufen die Trennstege 7, 8 in schmalen Kanten 32 zusammen (oder die Trennstege 7, 8 werden entsprechend schmal durchgehend ausgebildet); diese Kanten 32 begrenzen im eingesetzten Zustand die Lichtauskoppelflächen 30a in horizontaler Richtung. Die Trennstege 7, 8 lassen sich als Einzelteile einfach zumindest im Bereich ihrer Kanten 32 mit geringer Wandstärke ausbilden, sodass sich im Lichtbild horizontale Streifen reduzieren der vollständig eliminieren lassen.

Die Trennstege 7, 8 erstrecken sich über im Wesentlichen die gesamte Breite des Lichtführungskörpers 6. Dies hat einerseits fertigungstechnische Vorteile und erlaubt andererseits eine einfache, genaue Positionierung bzw. Halterung des Lichtführungskörpers an dem Aufnahmeelement, wie dies in der weiteren Beschreibung noch erörtert wird.

Die Trennstege 7, 8 stehen seitlich leicht über den Lichtführungskörper 6 über und sind anschließend - siehe insbesondere Figur 1 und 2 - um ca. 90° mit Abschnitten 7a, 8a nach oben bzw. unten umgebogen. Der Lichtführungskörper 6 wird von hinten in die Aufnahmeöffnung 5a des Aufnahmeelementes 5 eingesetzt, das Aufnahmeelement 5 weist in der Aufnahmeöffnung 5a im vorderen Bereich einen oder mehrere Anschläge (nämlich die Endbereiche der Schlitze 5b) auf, sodass die Position des Lichtführungskörpers 6 in Einschubrichtung definiert ist. Vor dem Einschieben des Lichtführungskörpers 6 werden die Trennstege 7, 8 in den Lichtführungskörper 6 von Vorne in die Halteöffnungen 23 eingeschoben. Durch das Einschieben von Vorne sind die Trennstege 7, 8 in dem Lichtführungskörper 6 nach dem Einschieben des Lichtführungskörpers 6 in die Aufnahmeöffnung 5a gegen ein Verschieben in Lichtaustrittsrichtung gesichert.

Die horizontalen Trennstege 7, 8 weisen außerdem Schlitze 7b, 8b auf, die denselben Abstand zueinander aufweisen wie die vertikalen, die Lichtführungen 30' bildenden Trennwände 21'. Somit können die Trennstege 7, 8 weiter in die Halteschlitze 23 eingeschoben werden, sodass die Trennstege 7, 8 mit ihren Schlitzen 7b, 8b die vertikalen Trennwände in einem hinteren Bereich umgreifen und somit die Trennstege 7b, 8b in Bezug auf den Lichtführungskörper 6 nicht mehr seitlich verschoben werden können. Durch diese Verrastung sind die Trennstege 7, 8 mit dem Lichtführungskörper 6 verbunden.

Die umgebogenen Abschnitte 7a, 8a der Trennstege 7, 8 umgreifen nach dem Einschieben des Lichtführungskörpers 6 in die Aufnahmeöffnung 5a das Aufnahmeelement 5 von Außen, sodass der Lichtführungskörper 6 gegen ein seitliches Bewegen an dem Aufnahmeelement 5 gesichert ist.

Üblicherweise wird der Lichtführungskörper 6 beispielsweise in dem Kunststoffhalter 5 heißverstemmt oder auf andere Weise mit diesem verbunden. Die Trennstege 7, 8 halten dann automatisch wie oben beschrieben zwischen dem Lichtführungskörper 6 und dem Kunststoffhalter 5. Jedoch ist es sicher auch möglich, die Trennstege noch zusätzlich mit dem Lichtführungskörper zusätzlich miteinander mit bekannten Methoden zu verbinden.

Fertigungstechnisch ist vorgesehen, dass der Lichtführungskörper 6 aus einem länglichen und flächigen, vorzugsweise ebenen Element 20 gebildet ist. Ein solches Element 20 ist in Figur 3 gezeigt. An diesem Element 20 sind eine Anzahl von Biegelinien (24) vorgesehen, welche sich normal zu den Längsseiten 21, 22 des Elementes 20 erstrecken, und wobei das Element 20 an den Biegelinien 24 derart umgebogen ist, dass durchgehende, sich über die gesamte Höhe des Lichtführungskörpers 6 ersteckende und unmittelbar nebeneinander liegende Lichtführungen 30' gebildet sind.

Figur 4 zeigt das Element 20 aus Figur 3 nach dem Umbiegeprozess.

Ein solches Element 20 lässt sich besonders einfach zumindest im Bereich der die Trennwände zwischen den Lichtführungen im Bereich der Lichtauskoppelflächen begrenzenden Abschnitte 21' mit geringer Stärke ausgestalten, sodass auch die (vertikalen) Trennwände 31 zwischen den Lichtführungen 30 im Bereich der Lichtauskoppelflächen 30a mit geringer Wandstärke ausgeführt werden können.

Konkret ist dabei vorgesehen, dass jeweils paarweise zwei Biegelinien 24 in einem ersten Abstand d1 zueinander verlaufen, und wobei benachbarte Paare von Biegelinien 24 in einem zweiten Abstand d2, der größer ist als der erste Abstand d1, zueinander angeordnet sind, wobei der zweite Abstand d2 zwischen zwei benachbarten Biegelinien 24 benachbarter Paare von Biegelinien 24 gemessen ist, und wobei das Element 20 um die beiden Biegelinien 24 eines Biegelinie-Paares jeweils in gleicher Richtung um 90° gebogen ist, und wobei die Biegelinien 24 benachbarter Biegelinien-Paare in entgegen gesetzter Richtung gebogen sind.

Auf diese Weise werden nebeneinander liegende, vertikale Lichtführungen 30' ausgebildet (siehe Figur 4).

Um gleich breite Lichtführungen 30', 30 zu erhalten, ist vorgesehen, dass der Abstand d1 zwischen zwei Biegelinien 24 eines Biegelinien-Paares für alle Biegelinien-Paare des Elementes 20 identisch ist.

Um gleich hohe, über die gesamte Höhe durchgehende Lichtführungen zu erhalten, ist vorgesehen, dass der Abstand d2 zwischen zwei benachbarten Biegelinien-Paaren zwischen allen Biegelinien-Paaren des Elementes 20 identisch ist.

Zur Bildung der vertikalen Trennwände 31 ist vorgesehen, dass das Element 20 an einer Längsseite 21 jeweils zwischen zwei Biegelinien-Paaren vorstehende Abschnitte 21' aufweist, welche im endgefertigten Zustand die vertikalen Trennwände 31 zwischen vertikalen Lichtführungen 30'; 30 im Bereich der Lichtauskoppelflächen 30a der Lichtführungen 30'; 30 bilden.

Einerseits bilden diese Abschnitte 21' eine Möglichkeit zur vertikalen Zentrierung des Lichtführungskörpers 6 in der Aufnahmeöffnung 5a, andererseits lassen sich diese Abschnitte 21' besonders einfach mit möglichst geringer (Wand-)Stärke ausführen. Mit dem in umgebogenem Zustand nach oben und unten über die Lichtführungen 30' überstehenden Bereich 6b (siehe Figuren 2, 4, 5) wird der Lichtführungskörper in die Aufnahmeöffnung eingesetzt und dort positioniert/befestigt.

Bei einer einfachen Ausführungsform der Erfindung ist vorgesehen, dass die vorspringenden Abschnitte 21' geradlinig verlaufend, d.h. parallel zur der gegenüberliegenden Längsseite 22 ausgebildet sind.

Vorzugsweise liegen die Lichtauskoppelflächen 30a der Lichtführungen 30 in einer Brennebene der Projektionslinse 4, wie dies in Figur 1 gezeigt ist. Entsprechend sind vorzugsweise die Lichtauskoppelflächen 30a und somit die Trennwände 31, 32 gekrümmt ausgebildet, wie dies in Figur 2 gut zu erkennen ist. Um dies realisieren zu können, ist daher vorzugsweise vorgesehen, dass die vorspringenden Abschnitte 21' gekrümmt, und zwar zu der gegenüberliegenden Längsseite 22 hin gekrümmt sind. Auf diese Weise lässt sich eine Krümmung der Lichtauskoppelflächen in vertikaler Richtung realisieren.

Vorzugsweise ist dabei vorgesehen, dass die gekrümmten Abschnitte in etwa auf Höhe der unteren Fläche des oberen Trennsteges 7 einen Minimalanstand zu der gegenüberliegenden Längsseite 22 aufweisen.

Um weiters eine Krümmung der Lichtauskoppelflächen in horizontaler Richtung realisieren zu können, ist vorgesehen, dass in den beiden seitlich äußeren Bereichen des Elementes 20 die vorspringenden Abschnitte 21' den größten Abstand zu der gegenüberliegenden Längsseite 22 aufweisen, und dass von beiden Seiten bei einem Fortschreiten entlang der Längsseite in Richtung der Mitte des Elementes 20 die Abstände der vorspringenden Abschnitte 21' zu der gegenüberliegenden Längsseite 22 abnehmen.

Diese gekrümmten Abschnitte sind in Figur 3 allerdings nur minimal angedeutet und auch in Figur 4 nicht besonders gut zuerkennen, da diese beiden Figuren lediglich zur Veranschaulichung der Formung eines Lichtführungskörpers (Figur 4) aus einem ebenen Element (Figur 3) dienen sollen, die Krümmungen in beide Richtungen sind aber in Figur 2 gut zu erkennen.

Die beiden Halteöffnungen bzw. Halteschlitze 23 für den die beiden Trennstege 7, 8, sind im Bereich der vorstehenden Abschnitte 21' angeordnet und sind vorzugsweise als schlitzförmige, sich ausgehend von den vorstehenden Abschnitten 21' normal zu den Längsseiten 21, 22 in das Element 20 hinein erstreckende Vertiefungen ausgebildet.

Weiters ist vorgesehen, dass die den vorspringenden Abschnitten 21' gegenüberliegende Längsseite 22 durchgehend geradlinig ausgebildet ist.

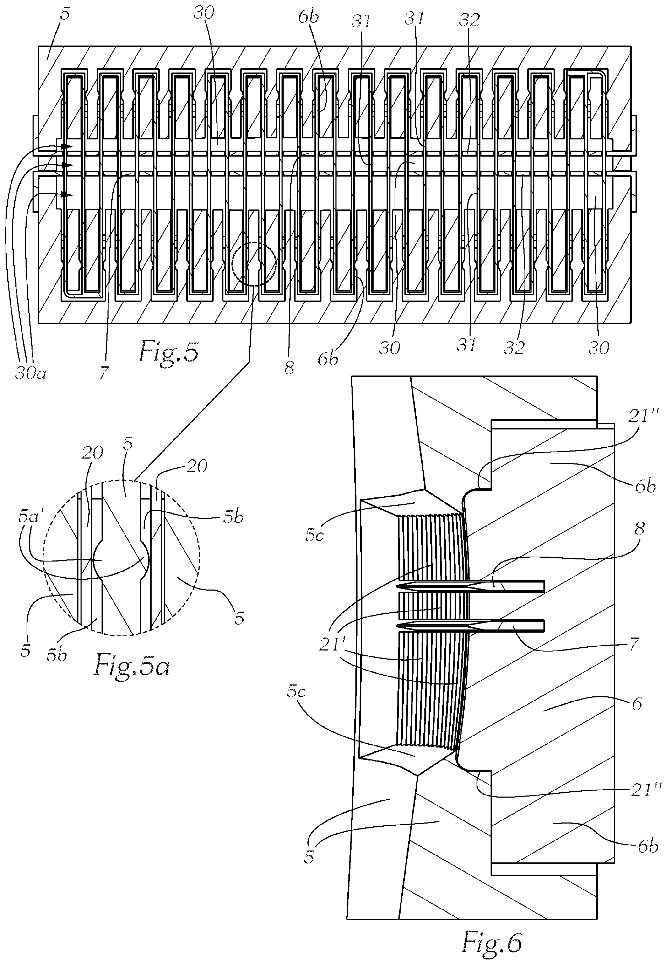

Figuren 3 und 4 sowie Figur 6 zeigen Abschnitte 21", welche die Längsseiten-Abschnitte 21 mit den vorstehenden Abschnitten 21' verbinden (diese Abschnitte 21" stehen z.B. in etwa normal auf die Längsseiten-Abschnitte 21). Diese Abschnitte 21" dienen zur vertikalen Zentrierung des Lichtführungskörpers 6 in der Aufnahmeöffnung 5 (siehe Figur 6). Die Aufnahmeöffnung 5a ist derart ausgestaltet, dass nach dem Einsetzen des Lichtführungskörpers 6 dieser mit den Abschnitten 21" an der Aufnahmeöffnung 5a oben und unten ansteht und somit in vertikaler Richtung positioniert ist.

Zur Positionierung des Lichtführungskörpers 6 in der Aufnahmeöffnung 5a gilt grundsätzlich folgendes. Nach oder gleichzeitig mit dem Einsetzen der Trennstege 7, 8 in den Lichtführungskörper 6 wird dieser wie schon beschrieben von hinten in die Aufnahmeöffnung 5a eingesetzt. In dem oberen und unteren Bereich weist die Aufnahmeöffnung 5a in Lichtaustrittsrichtung verlaufende Schlitze 5b auf. Mit den nach oben und unten über die Lichtführungen 30' überstehenden Bereichen 6b (siehe Figuren 2, 4, 5) wird der Lichtführungskörper 6 in die Schlitze 5b eingeschoben, bis er ansteht. Nach oben hin steht der Lichtführungskörper 6 mit den Abschnitten 21" an der Aufnahmeöffnung 5b an (siehe Figur 6). Ein seitliches Verschieben ist durch die umgebogenen Abschnitte 7b, 8b der Trennstege 7, 8 verhindert.

Betrachtet man noch Figur 5a, welche ein Detail aus Figur 5 zeigt, so kann wie dargestellt noch vorgesehen sein, dass die Schlitze 5b Verengungsstellen aufweisen. Die Schlitze 5b weisen eine größere Breite auf als die Wandstärke des Elementes 20 im Bereich 6b aufweist. Durch die Verengungsstellen, welche sich durch in dem Schlitzen 5b seitlich abstehende Verengungselement 5b' ergeben, wird der Lichtführungskörper 6 in den Schlitzen 5b nach dem Einschieben klemmend gehalten.

Vorzugsweise handelt es sich bei dem Element 20 um ein Blechelement ist. Um eine möglichst geringe Stärke im Bereich der vorstehenden Abschnitte 21', also eine geringe Stärke der vertikalen Trennwände 31 zwischen den Lichtführungen 30 insbesondere im Bereich der Lichtauskoppelflächen 30a realisieren zu können, kann vorgesehen sein, dass das Element 20 eine durchgehende Stärke, vorzugsweise von ca. 0,1 mm aufweist.

Vorteilhafterweise ist bei einer anderen Realisierung allerdings vorgesehen, dass das Element 20 lediglich im Bereich der Trennwände 21' zwischen den vertikalen Lichtführungen 30', vorzugsweise im Bereich der Lichtauskoppelflächen 30a, auf eine definierte Stärke, vorzugsweise eine Stärke von ca. 0,1 mm gefertigt, vorzugsweise geprägt ist, während in den anderen Bereichen das Element eine größere Stärke aufweist und somit das Element stabiler geformt ist. Lediglich in dem optisch wichtigen Bereich der Lichtauskoppelflächen, welcher Bereich im Lichtbild abgebildet wird, weist das Element somit eine (im Vergleich mit dem Rest des Elementes) geringe(re) Stärke auf.

Bei einer konkreten Realisierung der Erfindung ist vorgesehen, dass das Element 20 in seine Vor-Biegeform wie in Figur 3 dargestellt gestanzt ist. Das Element 20 wird praktisch aus einem größeren Element, etwa Blechelement in jener Form, in welcher es schließlich dem Biegeprozess unterzogen wird, herausgestanzt. Die diversen Ausgestaltungen, wie Schlitze, Vorsprünge werden also in das Ausgangsmaterial gestanzt, bevor dieses dann entlang der Biegelinien gebogen wird.

Das Element 20 ist Licht reflektierend, vorzugsweise hochglänzend ausgebildet ist, wobei es mit Vorteil beidseitig Licht reflektierend, insbesondere hochglänzend ausgebildet ist. Beispielsweise ist vorgesehen, dass der Lichtführungskörper 6 hochglänzend lackiert ist.

Die Aufnahme 5 ist vorteilhafterweise aus einem Kunststoff gebildet. Weiters ist auch noch mit Vorteil vorgesehen, dass die Aufnahme 5 in ihrer Aufnahmeöffnung 5a zumindest im oberen und unteren Bereich 5c Licht reflektierend, insbesondere hochglänzende ausgebildet, vorzugsweise mit einer Licht reflektierenden, insbesondere hochglänzenden Schicht beschichtet, etwa bedampft ist.

Ebenso sind die Trennstege 7, 8 Licht reflektierend, insbesondere hochglänzend (vorzugsweise beidseitig) ausgebildet, beispielsweise lackiert.

Die Lichtführungen der oberen bzw. unteren Reihe werden nach oben bzw. nach unten hin von der oberen bzw. unteren Innenseite des Aufnahmeelementes begrenzt, sodass es von Vorteil ist, wenn auch diese Bereiche Licht reflektierend ausgebildet sind.

## Patentansprüche

1. Leuchteinheit (1) für einen Scheinwerfer, insbesondere einen Kraftfahrzeugscheinwerfer, wobei die Leuchteinheit (1) eine Mehrzahl von Lichtquellen (2), eine Lichtführungseinheit (3) und eine nachgeschaltete Projektionslinse (4) umfasst, wobei die Lichtführungseinheit (3) eine Mehrzahl von Lichtführungen (30) aufweist, wobei jede Lichtführung (30) je eine Lichtauskoppelfläche (30a) aufweist, und wobei jede Lichtquelle (2) Licht genau in eine ihr zugeordnete Lichtführung (30) einkoppelt, und wobei benachbarte Lichtführungen (30) durch Trennwände (31, 32) voneinander getrennt sind,
wobei
die Lichtführungseinheit (3) ein Aufnahmeelement (5) umfasst, welches Aufnahmeelement (5) eine in Lichtaustrittsrichtung das Aufnahmeelement (5) vollständig durchsetzende Aufnahmeöffnung (5a) aufweist,
sowie weiters zumindest einen Lichtführungskörper (6) umfasst, welcher zumindest eine Lichtführungskörper (6) als von dem Aufnahmeelement (5) getrennt ausgebildetes Bauelement ausgebildet ist, in welchem zumindest einen Lichtführungskörper (6) zumindest ein Teil der Lichtführungen (30) der Lichtführungseinheit (3) ausgebildet ist, und wobei der zumindest eine Lichtführungskörper (6) in die Aufnahmeöffnung (5a) des Aufnahmeelementes (5) eingesetzt ist, und wobei der zumindest eine Lichtführungskörper (6) in Einbaulage seitlich nebeneinander liegende, sich im Wesentlichen über die gesamte Höhe des Lichtführungskörpers (6) erstreckende Lichtführungen (30') aufweist, **dadurch gekennzeichnet, dass** in dem zumindest einen Lichtführungskörper (6) Halteöffnungen, z.B. Halteschlitze (23) zur Aufnahme von zumindest einem in Einbaulage im Wesentlichen horizontal liegenden Trennsteg (7, 8) vorgesehen sind.

2. Leuchteinheit nach Anspruch 1, **dadurch gekennzeichnet, dass** der zumindest eine Lichtführungskörper (6) in der Aufnahmeöffnung (5a) des Aufnahmeelementes (5) fix befestigt ist.

3. Leuchteinheit nach Anspruch 1 oder 2, **dadurch gekennzeichnet, dass** genau ein Lichtführungskörper (6) vorgesehen ist, welcher alle Lichtführungen (30) der Lichtführungseinheit (3) aufweist.

4. Leuchteinheit nach einem der Ansprüche 1 bis 3, **dadurch gekennzeichnet, dass** Halteöffnungen, z.B. Halteschlitze (23) für genau zwei Trennstege (7, 8) vorgesehen sind, wobei die Halteöffnungen (23) derart angeordnet sind, dass in Einbaulage ein Trennsteg (7) oberhalb des zweiten Trennsteges (8) liegt, und wobei die eingesetzten Trennstege (7, 8) die sich über die gesamte Höhe des Lichtführungskörpers (6) erstreckenden Lichtführungen (30') in drei Reihen von Lichtführungen (30) unterteilt, und wobei insbesondere sich der zumindest eine Trennsteg (7, 8) über im Wesentlichen die gesamte Breite des zumindest einen Lichtführungskörpers (6) erstreckt.

5. Leuchteinheit nach einem der Ansprüche 1 bis 4, **dadurch gekennzeichnet, dass** der zumindest eine Lichtführungskörper (6) aus einem länglichen und flächigen, vorzugsweise ebenen Element (20) gebildet ist, an welchem Element (20) eine Anzahl von Biegelinien (24) vorgesehen sind, welche Biegelinien (24) sich normal zu den Längsseiten (21, 22) des Elementes (20) erstrecken, und wobei das Element (20) an den Biegelinien (24) derart umgebogen ist, dass durchgehende, sich über die gesamte Höhe des Lichtführungskörpers (6) ersteckende und unmittelbar nebeneinander liegende Lichtführungen (30') gebildet sind, wobei vorzugsweise jeweils paarweise zwei Biegelinien (24) in einem ersten Abstand (d1) zueinander verlaufen, und wobei benachbarte Paare von Biegelinien (24) in einem zweiten Abstand (d2), der größer ist als der erste Abstand (d1), zueinander angeordnet sind, wobei der zweite Abstand (d2) zwischen zwei benachbarten Biegelinien (24) benachbarter Paare von Biegelinien (24) gemessen ist, und wobei das Element (20) um die beiden Biegelinien (24) eines Biegelinie-Paares jeweils in gleicher Richtung um 90° gebogen ist, und wobei die Biegelinien (24) benachbarter Biegelinien-Paare in entgegen gesetzter Richtung gebogen sind, und wobei insbesondere der Abstand (d1) zwischen zwei Biegelinien (24) eines Biegelinien-Paares für alle Biegelinien-Paare des Elementes (20) identisch ist.

6. Leuchteinheit nach Anspruch 5, **dadurch gekennzeichnet, dass** der Abstand (d2) zwischen zwei benachbarten Biegelinien-Paaren zwischen allen Biegelinien-Paaren des Elementes (20) identisch ist.

7. Leuchteinheit nach Anspruch 5 oder 6, **dadurch gekennzeichnet, dass** das Element (20) an einer Längsseite (21) jeweils zwischen zwei Biegelinien-Paaren vorstehende Abschnitte (21') aufweist, welche im endgefertigten Zustand die vertikalen Trennwände (31) zwischen vertikalen Lichtführungen (30'; 30) im Bereich der Lichtauskoppelflächen (30a) der Lichtführungen (30'; 30) bilden, wobei vorzugsweise die vorspringenden Abschnitte (21') geradlinig verlaufend, d.h. parallel zur der gegenüberliegenden Längsseite ausgebildet sind, oder vorzugsweise die vorspringenden Abschnitte (21') gekrümmt, und zwar zu der gegenüberliegenden Längsseite (22) hin gekrümmt sind, wobei insbesondere die gekrümmten Abschnitte in etwa in ihrer Mitte einen Minimalanstand zu der gegenüberliegenden Längsseite (22) aufweisen.

8. Leuchteinheit nach Anspruch 7, **dadurch gekennzeichnet, dass** in den beiden seitlich äußeren Bereichen des Elementes (20) die vorspringenden Abschnitte (21') den größten Abstand zu der gegenüberliegenden Längsseite (22) aufweisen, und dass von beiden Seiten bei einem Fortschreiten entlang der Längsseite in Richtung der Mitte des Elementes (20) die Abstände der vorspringenden Abschnitte (21') zu der gegenüberliegenden Längsseite (22) abnehmen.

9. Leuchteinheit nach einem der Ansprüche 1 bis 8, **dadurch gekennzeichnet, dass** die zumindest eine Halteöffnung, z.B. Halteschlitz (23) bzw. vorzugsweise die beiden Halteöffnungen bzw. Halteschlitze (23) für den zumindest einen Trennsteg, vorzugsweise für zwei Trennstege (7, 8) im Bereich der vorstehenden Abschnitte (21') angeordnet sind, vorzugsweise als schlitzförmige, sich ausgehend von den vorstehenden Abschnitten (21') normal zu den Längsseiten (21, 22) in das Element (20) hinein erstreckende Vertiefungen ausgebildet sind .

10. Leuchteinheit nach einem der Ansprüche 7 bis 9, **dadurch gekennzeichnet, dass** die den vorspringenden Abschnitten (21') gegenüberliegende Längsseite (22) durchgehend geradlinig ausgebildet ist.

11. Leuchteinheit nach einem der Ansprüche 5 bis 10, **dadurch gekennzeichnet, dass** das Element (20) ein Blechelement ist.

12. Leuchteinheit nach einem der Ansprüche 5 bis 11, **dadurch gekennzeichnet, dass** das Element (20) eine durchgehende Stärke, vorzugsweise von ca. 0,1 mm aufweist.

13. Leuchteinheit nach einem der Ansprüche 5 bis 12, **dadurch gekennzeichnet, dass** das Element (20) zumindest, vorzugsweise lediglich im Bereich der Trennwände (21') zwischen den vertikalen Lichtführungen (30'), vorzugsweise im Bereich der Lichtauskoppelflächen (30a), auf eine definierte Stärke, vorzugsweise eine Stärke von ca. 0,1 mm gefertigt, vorzugsweise geprägt ist.

14. Leuchteinheit nach einem der Ansprüche 5 bis 13, **dadurch gekennzeichnet, dass** das Element (20) in seine Vor-Biegeform gestanzt ist.

15. Leuchteinheit nach einem der Ansprüche 5 bis 14, **dadurch gekennzeichnet, dass** der Lichtführungskörper (6) bzw. das Element (20), vorzugsweise das Blechelement licht-reflektierend, vorzugsweise hochglänzend ausgebildet ist, wobei vorzugsweise das Element (20), vorzugsweise das Blechelement beidseitig Licht reflektierend, insbesondere hochglänzend ausgebildet ist.

16. Leuchteinheit nach einem der Ansprüche 1 bis 15, **dadurch gekennzeichnet, dass** der zumindest eine Trennsteg (7, 8) licht-reflektierend, vorzugsweise hochglänzend ausgebildet ist, vorzugsweise beidseitig Licht reflektierend, insbesondere hochglänzend ausgebildet ist.

17. Fahrzeugscheinwerfer mit zumindest einer Leuchteinheit nach einem der Ansprüche 1 bis 16.

## Claims

1. Light-emitting unit (1) for a headlamp, in particular a motor vehicle headlamp, wherein the light-emitting unit (1) comprises a plurality of light sources (2), a light guiding unit (3) and a downstream projection lens (4), wherein the light guiding unit (3) has a plurality of light guides (30), wherein each respective light guide (30) has a light emission surface (30a), and wherein each light source (2) injects light exactly into a light guide (30) allocated to same light source (2), and wherein adjacent light guides (30) are separated from each other by dividers (31, 32),
wherein the light guiding unit (3) comprises a receiving element (5), said receiving element (5) having a receiving opening (5a) fully penetrating the receiving element (5) in the direction of the light emission,
and wherein the light guiding unit (3) furthermore comprises at least one light guiding body (6), said at least one light guiding body (6) being designed as a component separate from the receiving element (5), at least a portion of the light guides (30) of the light guiding unit (3) being designed inside said at least one light guiding body (6), and wherein the at least one light guiding body (6) is inserted into the receiving opening (5a) of the receiving element (5), and wherein the at least one light guiding body (6) has light guides (30') positioned side by side to each other when installed and essentially extending across the entire height of the light guiding body (6), **characterized in that** mounting openings, such as mounting slots (23) for receiving at least one dividing bar (7, 8) positioned essentially horizontally when installed, are provided in the at least one light guiding body (6).

2. The light emitting unit according to Claim 1, **characterized in that** the at least one light guiding body (6) is fixed into position in the receiving opening (5a) of the receiving element (5).

3. The light emitting unit according to Claim 1 or 2, **characterized in that** exactly one light guiding body (6) is provided, which includes all light guides (30) of the light guiding unit (3).

4. The light emitting unit according to any one of Claims 1 to 3, **characterized in that** mounting openings, such as mounting slots (23) for exactly two dividing bars (7, 8), are provided, wherein the mounting openings (23) are arranged such that one dividing bar (7) is positioned above the second dividing bar (8) when installed, and wherein the installed dividing bars (7, 8) partition the light guides (30') extending across the entire height of the light guiding body (6) into three rows of light guides (30), and wherein in particular the at least one dividing bar (7, 8) essentially extends across the entire width of the at least one light guiding body (6).

5. The light emitting unit according to any one of Claims 1 to 4, **characterized in that** the at least one light guiding body (6) is designed from an elongated and flat, preferably plane, element (20), a number of bending lines (24) being provided on said element (20), said bending lines (24) extending perpendicularly to the longitudinal sides (21, 22) of the element (20), wherein the element (20) is bent at the bending lines (24) in such a manner that continuous light guides (30') are formed which extend across the entire height of the light guiding body (6) and which are positioned immediately next to each other, wherein pairs of two respective bending lines (24) preferably extend at a first distance (d1) to each other, and wherein adjacent pairs of bending lines (24) are arranged at a second distance (d2) to each other, which is greater than the first distance (d1), wherein the second distance (d2) is measured between two adjacent bending lines (24) of adjacent pairs of bending lines (24), and wherein the element (20) is bent at a 90° angle about the two bending lines (24) of a pair of bending lines in the same respective direction, and wherein the bending lines (24) of adjacent pairs of bending lines are bent in opposite directions, and wherein in particular the distance (d1) between two bending lines (24) of a pair of bending lines is identical for all pairs of bending lines of the element (20).

6. The light emitting unit according to Claim 5, **characterized in that** the distance (d2) between two adjacent pairs of bending lines is identical between all pairs of bending lines of the element (20).

7. The light emitting unit according to Claim 5 or 6, **characterized in that** the element (20) has sections (21') protruding between two respective pairs of bending lines on a longitudinal side (21), said sections (21') forming the vertical dividers (31) between vertical light guides (30', 30) in the area of the light emission surfaces (30a) of the light guides (30', 30) in their finished state, wherein the protruding sections (21') preferably extend in straight lines, i.e., are designed parallel to the opposite longitudinal side, or the protruding sections (21') preferably are curved, specifically curved toward the opposite longitudinal side (22), wherein the curved sections in particular have a minimum distance to the opposite longitudinal side (22) approximately in their centre.

8. The light emitting unit according to Claim 7, **characterized in that** the protruding sections (21') have the greatest distance to the opposite longitudinal side (22) in both outer lateral areas of the element (20), and that the distances of the protruding sections (21') to the opposite longitudinal side (22) decrease when advancing along the longitudinal side in the direction of the centre of the element (20).

9. The light emitting unit according to any one of Claims 1 to 8, **characterized in that** the at least one mounting opening, such as a mounting slot (23) or, correspondingly, the two mounting openings or mounting slots (23) for the at least one dividing bar, preferably for two dividing bars (7, 8), are arranged in the area of the protruding sections (21'), and preferably are designed as slot-shaped recesses extending into the element (20) starting at the protruding sections (21') and perpendicularly to the longitudinal sides (21, 22).

10. The light emitting unit according to any one of Claims 7 to 9, **characterized in that** the longitudinal side (22) opposite from the protruding sections (21') is designed in a continuous straight line.

11. The light emitting unit according to any one of Claims 5 to 10, **characterized in that** the element (20) is a sheet metal element.

12. The light emitting unit according to any one of Claims 5 to 11, **characterized in that** the element (20) has a continuous thickness, preferably one of approximately 0.1 mm.

13. The light emitting unit according to any one of Claims 5 to 12, **characterized in that** the element (20) is at least manufactured at a defined thickness, preferably a thickness of approximately 0.1 mm, preferably only in the area of the dividers (21') between the vertical light guides (30'), preferably in the area of the light emission surfaces (30a), and preferably is stamped to said thickness.

14. The light emitting unit according to any one of Claims 5 to 13, **characterized in that** the element (20) is punched into its pre-bending shape.

15. The light emitting unit according to any one of Claims 5 to 14, **characterized in that** the light guiding body (6) or, correspondingly, the element (20), preferably the sheet metal element, is designed to be reflective, preferably with a high-gloss finish, wherein the element (20), preferably the sheet metal element, preferably is reflective on both sides, and in particular is designed with a high-gloss finish on both sides.

16. The light emitting unit according to any one of Claims 1 to 15, **characterized in that** the at least one dividing bar (7, 8) is designed to be reflective, preferably is designed with a high-gloss finish, preferably reflective on both sides, in particular with a high-gloss finish on both sides.

17. A vehicle headlamp having at least one light emitting unit according to any one of Claims 1 to 16.

## Revendications

1. Unité d'éclairage (1) destinée à un phare, notamment à un phare de véhicule automobile, l'unité d'éclairage (1) comprenant une pluralité de sources lumineuses (2), une unité guide-lumière (3) et une lentille de projection (4) montée en aval, l'unité guide-lumière (3) comportant une pluralité de guides de lumière (30), chaque guide de lumière (30) comportant respectivement une surface de découplage de la lumière (30a), et chaque source lumineuse (2) injectant de la lumière précisément dans un guide de lumière (30) qui lui est associé, et des guides de lumière (30) voisins étant séparés les uns des autres par des cloisons (31, 32),
l'unité guide-lumière (3) comprenant un élément de logement (5), lequel élément de logement (5) comporte un orifice de logement (5a) traversant totalement l'élément de logement (5) dans la direction de sortie de la lumière,
ainsi que par ailleurs au moins un corps guide lumière (6), lequel au moins un corps guide lumière (6) est conçu sous la forme d'un composant séparé de l'élément de logement (5) dans lequel au moins un corps guide lumière (6) est conçue au moins une partie des guides de lumière (30) de l'unité guide-lumière (3), et l'au moins un corps guide lumière (6) étant inséré dans l'orifice de logement (5a) de l'élément de logement (5) et en position montée, l'au moins un corps guide lumière (6) comportant des guides de lumière (30') situés latéralement côté à côte sur toute la hauteur du corps guide lumière (6), **caractérisée en ce que** dans l'au moins un corps guide lumière (6) sont prévus des orifices de maintien, par exemple des fentes de maintien (23) destiné(e)s à recevoir au moins un listel de séparation (7, 8) situé sensiblement à l'horizontale en position montée.

2. Unité d'éclairage selon la revendication 1, **caractérisée en ce que** l'au moins un corps guide lumière (6) est fixé de manière fixe dans l'orifice de logement (5a) de l'élément de logement (5).

3. Unité d'éclairage selon la revendication 1 ou 2, **caractérisée en ce qu'**il est prévu précisément un corps guide lumière (6) lequel comporte tous les guides de lumière (30) de l'unité guide-lumière (3).

4. Unité d'éclairage selon l'une quelconque des revendications 1 à 3, **caractérisée en ce que** des orifices de maintien, par exemple des fentes de maintien (23) sont prévu(e)s pour précisément deux listels de séparation (7, 8), les orifices de maintien (23) étant placés de telle sorte qu'en position montée, un listel de séparation (7) se situe au-dessus du deuxième listel de séparation (8), et les listels de séparation (7, 8) insérés divisant les guides de lumière (30') s'étendant sur toute la hauteur du corps guide lumière (6) en trois rangées de guides de lumière (30) et notamment l'au moins un listel de séparation (7, 8) s'étendant sur sensiblement toute la largeur de l'au moins un corps guide lumière (6).

5. Unité d'éclairage selon l'une quelconque des revendications 1 à 4, **caractérisée en ce que** l'au moins un corps guide lumière (6) est formé par un élément (20) allongé et plat, de préférence plan, sur lequel élément (20) est prévu un nombre de lignes de flexion (24), lesquelles lignes de flexion (24) s'étendent normalement vers les côtés longitudinaux (21, 22) de l'élément (20), et l'élément (20) étant replié sur les lignes de flexion (24) de sorte à former des guides de lumière (30') traversants, s'étendant sur toute la hauteur du corps guide lumière (6) et situés directement côte à côte, de préférence, chaque fois par paires, deux lignes de flexion (24) s'écoulant avec un premier écart (d1) mutuel, et des paires voisines de lignes de flexion (24) étant placées avec un deuxième écart (d2) mutuel qui est supérieur au premier écart (d1), le deuxième écart (d2) entre deux lignes de flexion (24) voisines de paires voisines de lignes de flexion (24) étant mesuré, et l'élément (20) étant recourbé chaque fois dans la même direction autour des deux lignes de flexion (24) d'une paire de lignes de flexion de la valeur de 90°, et les lignes de flexion (24) de paires voisines de lignes de flexion étant recourbées en direction opposée, et notamment l'écart (d1) entre deux lignes de flexion (24) d'une paire de lignes de flexion étant identique pour toutes les paires de lignes de flexion de l'élément (20).

6. Unité d'éclairage selon la revendication 5, **caractérisée en ce que** l'écart (d2) entre deux paires voisines de lignes de flexion est identique entre toutes les paires de lignes de flexion de l'élément (20).

7. Unité d'éclairage selon la revendication 5 ou 6, **caractérisée en ce que** l'élément (20) comporte sur un côté longitudinal (21) des sections (21') débordant chaque fois entre deux paires de lignes de flexion, qui en position d'assemblage final, forment les cloisons (31) entre des guides de lumière (30' ; 30) verticaux, dans la zone des surfaces de découplage de la lumière (30a) des guides de lumière (30'; 30), de préférence les sections (21') débordantes étant conçues en s'étendant en ligne droite, c'est à dire à la parallèle du côté longitudinal opposé, ou de préférence les sections (21') débordantes étant recourbées, à savoir recourbées vers le côté longitudinal (22), notamment les sections recourbées présentant environ en leur milieu un écart minimal par rapport au côté longitudinal (22) opposé.

8. Unité d'éclairage selon la revendication 7, **caractérisée en ce que** dans les deux zones latéralement extérieures de l'élément (20), les sections (21') débordantes présentent l'écart le plus grand par rapport au côté longitudinal (22) opposé, et **en ce qu'**à partir des deux côtés, lors d'une progression le long du côté longitudinal dans la direction du milieu de l'élément (20), les écarts des sections (21') débordantes par rapport au côté longitudinal (22) opposé décroissent.

9. Unité d'éclairage selon l'une quelconque des revendications 1 à 8, **caractérisée en ce que** l'au moins un orifice de maintien, par exemple une fente de maintien (23), de préférence les deux orifices de maintien ou fentes de maintien (23) pour l'au moins un listel de séparation, de préférence pour deux listels de séparation (7, 8) sont placé(e)s dans la zone des sections (21') débordantes, de préférence sous la forme de creux en forme de fentes, s'étendant normalement, à partir des sections (21') débordantes vers les côtés longitudinaux (21, 22) à l'intérieur de l'élément (20).

10. Unité d'éclairage selon l'une quelconque des revendications 7 à 9, **caractérisée en ce que** le côté longitudinal (22) opposé aux sections (21') débordantes est conçu en continu en ligne droite.

11. Unité d'éclairage selon l'une quelconque des revendications 5 à 10, **caractérisée en ce que** l'élément (20) est un élément en tôle.

12. Unité d'éclairage selon l'une quelconque des revendications 5 à 11, **caractérisée en ce que** l'élément (20) présente une largeur continue d'environ 0,1 mm.

13. Unité d'éclairage selon l'une quelconque des revendications 5 à 12, **caractérisée en ce que** pour le moins, de préférence uniquement dans la zone des cloisons (21'), entre les guides de lumière (30') verticaux, de préférence dans la zone des surfaces de découplage de la lumière (30a), l'élément (20) est usiné, de préférence gaufré à une épaisseur définie, de préférence une épaisseur d'environ 0,1 mm.

14. Unité d'éclairage selon l'une quelconque des revendications 5 à 13, **caractérisée en ce que** l'élément (20) est estampé dans sa forme de pré-flexion.

15. Unité d'éclairage selon l'une quelconque des revendications 5 à 14, **caractérisée en ce que** le corps guide lumière (6) ou l'élément (20), de préférence l'élément en tôle est conçu de manière à réfléchir la lumière, de préférence à haute brillance, de préférence l'élément (20), de préférence l'élément en tôle étant conçu de manière à réfléchir la lumière, notamment à haute brillance sur les deux faces.

16. Unité d'éclairage selon l'une quelconque des revendications 1 à 15, **caractérisée en ce que** l'au moins un listel de séparation (7, 8) est conçu de manière à réfléchir la lumière, de préférence à haute brillance, est conçu de préférence de manière à réfléchir la lumière, notamment à haute brillance sur les deux faces.

17. Phare de véhicule doté d'au moins une unité d'éclairage selon l'une quelconque des revendications 1 à 16.
